# EUROPEAN PATENT APPLICATION

(11) **EP 4 492 524 A1**
(43) Date of publication of application: **15.01.2025**
(21) Application number: 23766416.4
(22) Date of filing: 10.02.2023
(51) Int. Cl.: H01M 10/0562, C01G 33/00, C04B 35/50, H01B 1/06, H01M 10/052, H01M 10/054

(54) **SOLID ELECTROLYTE FOR SECONDARY BATTERY, AND SECONDARY BATTERY**

(30) Priority: 10.03.2022 JP 2022037356
(71) Applicant: DENSO CORPORATION, Kariya-city, Aichi 448-8661 (JP)
(72) Inventor: YOSHIDA, Shuhei, Kariya-city, Aichi 448-8661 (JP); ONODERA, Hitoshi, Kariya-city, Aichi 448-8661 (JP); SHIMONISHI, Yuta, Kariya-city, Aichi 448-8661 (JP)
(74) Representative: TBK
(86) International application number: PCT/JP2023/004539
(87) International publication number: WO 2023/171236

(57) **Abstract**

An oxide-based solid electrolyte having a pyrochlore structure and represented by a composition formula Aa_{2-α}Ab_{(1+α)/3}B₂O_{7-β}X_{β} is used as a solid electrolyte for a secondary battery. Aa is an alkali metal. Ab contains at least a lanthanide. B is a cationic metal different from Aa and Ab. X is an anion that is substitutable with an O atom constituting the pyrochlore structure.

## Description

### CROSS REFERENCE TO RELATED APPLICATION

This application is based on Japanese Patent Application No. 2022-37356 filed on March 10, 2022, the disclosure of which is incorporated herein by reference.

### TECHNICAL FIELD

The present disclosure relates to a solid electrolyte for a secondary battery and a secondary battery including the solid electrolyte.

### BACKGROUND ART

In recent years, from the viewpoint of improving safety, lithium ion batteries that are entirely solidified using a solid electrolyte have been attracting attention as lithium ion batteries that do not use organic solvents as electrolytes. As solid electrolytes for use in such lithium ion batteries, sulfide solid electrolytes, oxide solid electrolytes, and the like have been proposed. For example, as solid electrolytes that are more stable in air, Patent Literature 1 discloses an oxide solid electrolyte having a garnet structure (for example, LLZO), and Patent Literature 2 discloses an oxide solid electrolyte having a NASICON structure (for example, LAGP).

### PRIOR ART LITERATURE

### [Patent Literature]

Patent Literature 1: JP 2021-150140 A
Patent Literature 2: JP 2020-80231 A

### SUMMARY OF INVENTION

However, since ionic conductivities of conventionally used oxide solid electrolytes having a garnet structure or a NASICON structure are low, it is difficult to sufficiently increase an output density of a secondary battery.

In view of the above, an object of the present disclosure is to provide a solid electrolyte for a secondary battery capable of improving an ionic conductivity.

In order to achieve the above object, a solid electrolyte for a secondary battery of the present disclosure includes an oxide-based solid electrolyte having a pyrochlore structure and having a composition formula of Aa_{2-α}Ab_{(1+α)/3}B₂O_{7-β}X_{β}. Aa is an alkali metal. Ab contains at least a lanthanoid. B is a cationic metal different from Aa and Ab. X is an anion that is substitutable with an O atom constituting a pyrochlore structure.

According to the present disclosure, it is possible to improve an ionic conductivity as compared with oxide-based solid electrolytes conventionally known as solid electrolytes for secondary batteries.

### BRIEF DESCRIPTION OF DRAWINGS

FIG. 1 is a cross-sectional view showing a configuration of a secondary battery according to an embodiment of the present disclosure.
FIG. 2 is a diagram showing a manufacturing process of a solid electrolyte.
FIG. 3 is a diagram showing a crystal structure of the solid electrolyte.
FIG. 4 is a diagram showing impedance measurement results of solid electrolytes of the embodiment and a comparative example.
FIG. 5 is a diagram showing results of measuring an ionic conductivity of the solid electrolyte while changing an environmental temperature.

### DESCRIPTION OF EMBODIMENTS

Hereinafter, an embodiment in which a solid electrolyte for a secondary battery of the present disclosure is applied to a lithium ion battery will be described with reference to the drawings. A secondary battery 10 of the present embodiment is a lithium ion battery in which charging and discharging are performed by lithium ions moving between a negative electrode 12 and a positive electrode 14.

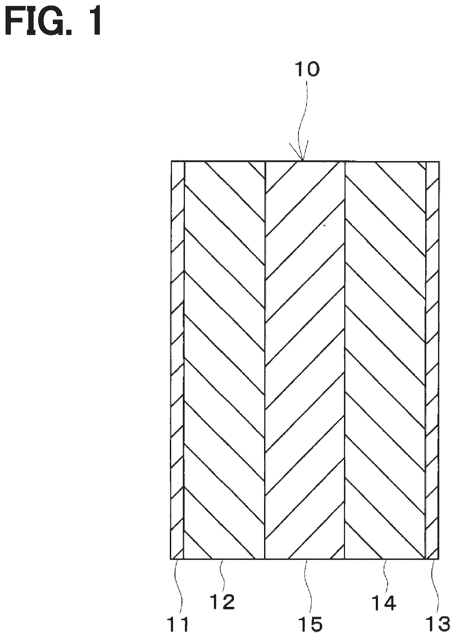

As shown in FIG. 1, the secondary battery 10 includes a negative electrode current collector 11, the negative electrode 12, a positive electrode current collector 13, the positive electrode 14, and a solid electrolyte 15. The solid electrolyte 15 corresponds to the solid electrolyte for the secondary battery.

The solid electrolyte 15 is sandwiched between the positive electrode 14 and the negative electrode 12. The negative electrode 12 and the solid electrolyte 15 are in contact with each other. The positive electrode 14 and the solid electrolyte 15 are in contact with each other. The negative electrode 12 and the positive electrode 14 are connected through the solid electrolyte 15. The secondary battery 10 of the present embodiment is a lithium ion battery in which charging and discharging are performed by lithium ions moving between the negative electrode 12 and the positive electrode 14 through the solid electrolyte 15.

A stacked body including the negative electrode 12, the positive electrode 14, and the solid electrolyte 15 is disposed between the negative electrode current collector 11 and the positive electrode current collector 13. The negative electrode current collector 11 and the negative electrode 12 are in contact with each other. The positive electrode current collector 13 and the positive electrode 14 are in contact with each other. The negative electrode current collector 11 and the positive electrode current collector 13 are connected through the stacked body.

Any material that can be used as a current collector for a lithium ion battery can be used for the negative electrode current collector 11 and the positive electrode current collector 13. In the present embodiment, Cu is used as the negative electrode current collector 11, and Al is used as the positive electrode current collector 13.

A negative electrode material constituting the negative electrode 12 can be any material that can be used as a negative electrode active material for lithium ion batteries, such as a carbon-based negative electrode material, an oxide-based negative electrode material, or a metal-based negative electrode material. In the present embodiment, a lithium-based negative electrode material or a Si-based negative electrode material is used.

A positive electrode material constituting the positive electrode 14 can be any material that can be used as a positive electrode active material for lithium ion batteries. As the positive electrode 14, for example, a cobalt-based positive electrode material (LiCoO₂), a nickel-based positive electrode material (LiNiO₂), a manganese-based positive electrode material (LiMn₂O₄), an iron phosphate-based positive electrode material (LiFePO₄), a ternary positive electrode material (NMC) mainly composed of nickel, manganese, and cobalt, and the like can be used.

The solid electrolyte 15 has ion conductivity and is capable of moving lithium ions between the negative electrode 12 and the positive electrode 14. The solid electrolyte 15 is an oxide-based solid electrolyte, and has a pyrochlore structure represented by the composition formula "Aa_{2-α}Ab_{(1+α)/3}B₂O_{7-β}X_{β}".

In the above composition formula, O is an oxygen atom, and Aa, Ab, B, and X represent any element or group. Aa, Ab and B are different types of cations, and O and X are different types of anions.

In the above composition formula, 0.6<α<2.0, and 0<β≤1. When α changes, the composition ratio of Aa and Ab changes, and when β changes, the composition ratio of O and X changes.

Aa is an alkali metal. As the alkali metal represented by Aa, any one selected from a group consisting of Li, Na, and K can be used. In the present embodiment, Li is used as Aa. The composition ratio (2-α) of Aa is in the range of 0<(2-α)<1.4.

Ab contains at least a lanthanoid. As the lanthanoid represented by Ab, at least one selected from a group consisting of La, Ce, Nd, and Sm can be used. In the present embodiment, La is used as Ab. The composition ratio (1+α)/3 of Ab is in the range of 0.53<(1+α)/3<1.

A basic structure of Ab consists of the lanthanoid, and a part of the lanthanoid constituting Ab may be substituted with an alkaline earth metal (Ca, Mg, Sr, or the like). In the solid electrolyte 15 of the present embodiment, it is considered that since the lanthanoid is contained in the pyrochlore structure in which 0.6<α<2.0 and 0<β≤1 in the above composition formula, defects are generated in a crystal structure and an ionic conductivity is improved.

In the solid electrolyte 15 of the present embodiment, an A cation in a composition formula "A₂B₂O₇" of a general pyrochlore structure is a composite cation including lithium and the lanthanoid. This is believed to contribute to the improvement of the ionic conductivity of the solid electrolyte 15.

B is a cationic metal different from Aa and Ab, and is a transition metal or a metal selected from Group 15 elements. B constitutes an octahedron surrounded by six O atoms in a crystal. As the transition metal represented by B, a Group 4 transition metal or a Group 5 transition metal can be used, and more specifically, at least one selected from a group consisting of Nb, Ta, Ti, Zr, Hf, and V can be used. As the Group 15 element represented by B, Sb and Bi can be used.

X is an anion that can be substituted with an O atom constituting the pyrochlore structure. X is different from an O atom in electronegativity and polarizability. As the anion represented by X, at least one selected from a group consisting of F, S, Cl, and OH can be used. The composition ratio β of X is in the range of 0<β≤1, and at least a part of O atoms constituting the pyrochlore structure is substituted with X. In the present embodiment, F is used as X.

The solid electrolyte 15 of the present embodiment has a defect structure in which lattice defects are included in the crystal by replacing a part of O atoms constituting the pyrochlore structure with anions having electronegativity and polarizability different from those of the O atoms. It is considered that the solid electrolyte 15 of the present embodiment has improved ionic conductivity due to the presence of the defect structure in the pyrochlore structure.

In the solid electrolyte 15 of the present embodiment, the defect structure is a state in which Aa and Ab are partially deficient. The composition formula of the general pyrochlore structure is "A₂B₂O₇", and a composition ratio of the A cation is 2. In contrast, in the solid electrolyte 15 of the present embodiment, composition ratios of Aa and Ab are "2-α" and"(1+α)/3", respectively, and 0.6<α<2.0, so that the total composition ratio of Aa and Ab is less than 2. That is, in the crystal structure of the solid electrolyte 15 of the present embodiment, at least one of Aa and Ab is partially deficient. A composition ratio corresponding to the deficient portion of Aa and Ab is (2α-1)/3.

In addition to the deviation of the composition ratio, the defect structure can also be formed by making a sum of valences of the cations composed of Aa, Ab and B and the anions composed of O and X negative in the above composition formula.

Furthermore, the solid electrolyte 15 of the present embodiment is a composite anion compound having the pyrochlore structure containing a plurality of anions such as O and X, and since the anion represented by X is present in the BO6 coordination octahedral structure, the alkali metal of Aa can be positioned in the center of a space between the BO6 coordination octahedrons without approaching the BO6 coordination octahedron. Therefore, it is considered that the solid electrolyte 15 of the present embodiment has high ionic conductivity when used in an electric field such as a battery.

In addition, since α and β in the above composition formula affect the lattice defects and the ionic conductivity, it is desirable to set α and β in an appropriate range. When the values of α and β are large, a defect concentration in the crystal lattice increases, but when the values exceed a certain amount, the concentration of the alkali metal represented by Aa decreases and the ionic conductivity decreases. Therefore, it is desirable to control α within a range of 0.6<α<2.0 and β within a range of 0<β≤1.

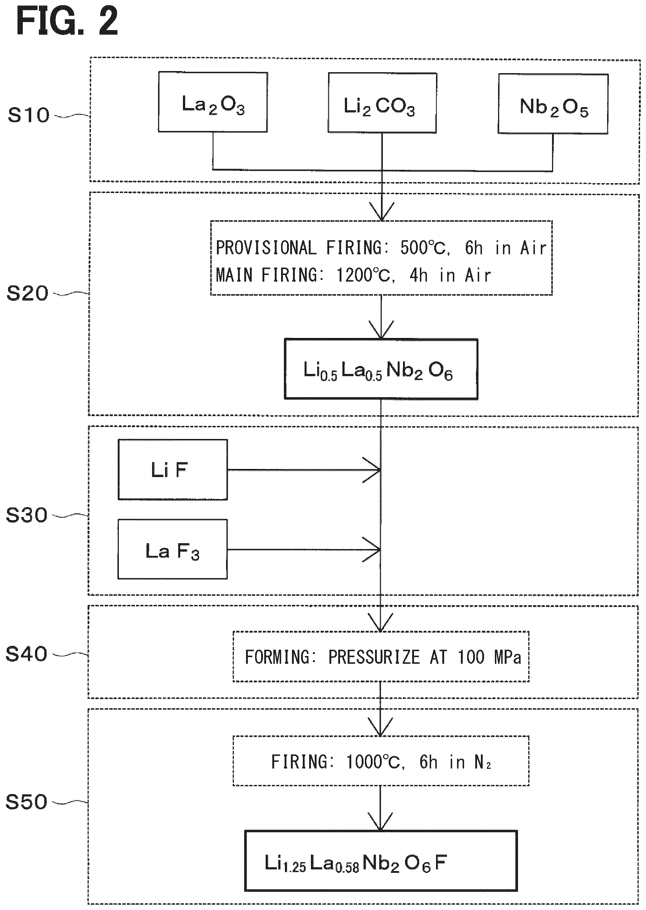

Next, a method for manufacturing the solid electrolyte 15 of the present embodiment will be described with reference to FIG. 2. In the method for manufacturing the solid electrolyte 15, a first mixing process S10, a first firing process S20, a second mixing process S30, a forming process S40, and a second firing process S50 are performed in this order.

### (First Mixing Process)

First, a lanthanum source, a lithium source, and a niobium source are prepared as raw materials, and the first mixing process S10 in which these sources are mixed together is performed. As the lanthanum source, the lithium source, and the niobium source, metal oxides, metal carbonates, or the like can be used. In the present embodiment, La₂O₃ is used as the lanthanum source, Li₂CO₃ is used as the lithium source, and Nb₂O₅ is used as the niobium source. In the first mixing process, La₂O₃, Li₂CO₃, and Nb₂O₅ are mixed at a predetermined ratio.

### (First Firing Process)

Next, the first firing process S20 of firing the mixture of La₂O₃, Li₂CO₃, and Nb₂O₅ is performed. In the first firing process S20, two stages of firing are performed. In a first stage, a provisional firing is performed by heating the mixture in air at 500°C for 6 hours. By the provisional firing, moisture and the like are removed from the mixture, and a reactivity can be increased. Subsequent to the provisional firing, a main firing in which the mixture is heated in air at 1200°C for 4 hours is performed. Accordingly, Li_{0.5}La_{0.5}Nb₂O₆ which is a precursor of a target product is obtained.

### (Second Mixing Process)

Next, the second mixing process S30 is performed in which a fluorine source is prepared as a raw material, and the fluorine source is mixed with Li_{0.5}La_{0.5}Nb₂O₆ being the precursor. As the fluorine source, a metal fluoride can be used. In the present embodiment, LiF and LaF₃ are used as fluorine sources. LiF is a fluorine source and a lithium source, and LaF₃ is a fluorine source and a lanthanum source. In the second mixing process S30, LiF and LaF₃ are mixed with Li_{0.5}La_{0.5}Nb₂O₆ at a predetermined ratio to obtain a mixed powder.

### (Forming Process)

Next, the forming process S40 is performed in which the mixed powder of Li_{0.5}La_{0.5}Nb₂O₆, LiF, and LaF₃ is processed into a pellet shape and is pressurized at 100 MPa. Accordingly, the mixture of Li_{0.5}La_{0.5}Nb₂O₆, LiF, and LaF₃ is formed into a pellet shape.

### (Second Firing Process)

Next, the second firing process S50 of firing the mixture of Li_{0.5}La_{0.5}Nb₂O₆, LiF, and LaF₃ is performed. In the second firing process S50, firing is performed by heating the mixture of Li_{0.5}La_{0.5}Nb₂O₆, LiF, and LaF₃ at 1000°C for 6 hours in a nitrogen atmosphere.

Through the above processes, a crystal having a pyrochlore structure represented by the composition formula "Li_{1.25}La_{0.58}Nb₂O₆F" can be obtained. In this example, the crystal obtained in the second firing process S50 has the plate shape and can be used as the solid electrolyte 15 of the secondary battery 10. The relative density of the pellet-shaped sintered solid electrolyte was 78%.

Note that a crystal having a pyrochlore structure represented by the composition formula "Li_{2-α}La_{(1+α)/3}Nb2O_{7-β}F_{β}" can be obtained by changing the mixing ratio of La₂O₃, Li₂CO₃, and Nb₂O₅ and the mixing ratio of LiF and LaF₃ in the above production process.

In the composition formula, α can be adjusted by changing the mixing ratio of La₂O₃, Li₂CO₃, and Nb₂O₅. β can be adjusted by changing the mixing ratio of LiF and LaF₃. When firing is performed, a part of the materials is sublimated. Therefore, α and β can also be adjusted by changing firing conditions, a firing furnace atmosphere, and a firing furnace size in the first firing process and the second firing process.

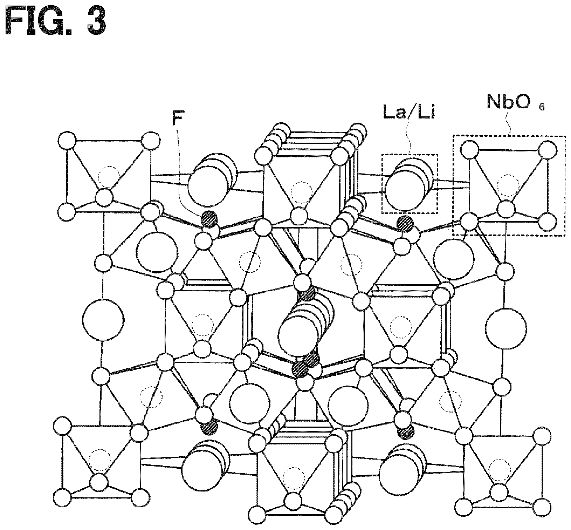

Next, the crystal structure of the solid electrolyte 15 of the present embodiment will be described with reference to FIG. 3. FIG. 3 shows the crystal structure of the solid electrolyte 15 of the present embodiment obtained by a synchrotron radiation analysis. In the synchrotron radiation analysis, the crystal structure was obtained by performing Rietveld analysis using measurement data by X-ray diffraction (XRD).

As shown in FIG. 3, the solid electrolyte 15 of the pyrochlore structure has a crystal structure in which an octahedral three-dimensional network composed of NbO₆ is formed. In NbO₆, O is arranged at each vertex with Nb as the center, and each vertex is shared with the adjacent NbO₆. In the three-dimensional network composed of NbO₆, a hexagonal tunnel structure in which cations composed of La/Li and anions composed of F are arranged is formed.

Next, a result of measuring the ionic conductivity of the solid electrolyte 15 of the present embodiment by an alternating current impedance method will be described.

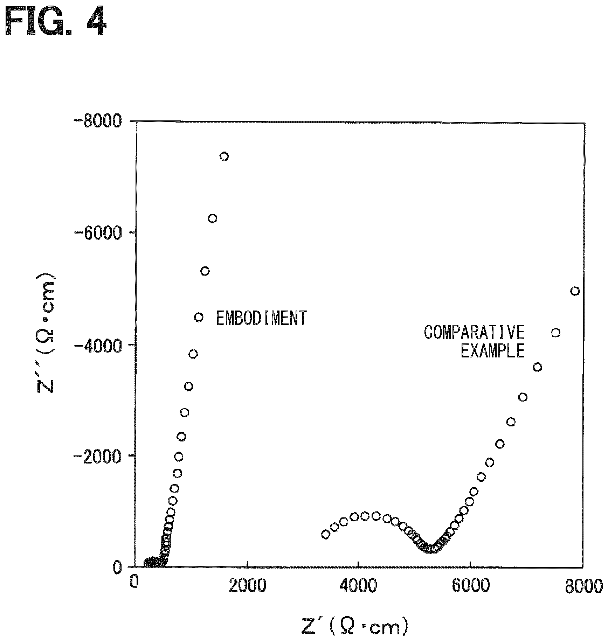

FIG. 4 shows a Nyquist plot of an impedance measured by applying an alternating current signal to the solid electrolyte 15 of the present embodiment. In FIG. 4, the vertical axis represents the imaginary component Z" of the impedance, and the horizontal axis represents the real component Z' of the impedance. FIG. 4 also shows an impedance of LLZO (Li₇La₃Zr₂O₁₂) being an oxide-based solid electrolyte as a comparative example. The impedance measurements were carried out at room temperature. Specifically, the impedance measurement was carried out at 25°C. In the present specification, room temperature is in the range of 10 to 40°C.

The impedance of the solid electrolyte was measured using a two-terminal method in which a measurement sample with electrodes coated on both sides of a pellet-shaped solid electrolyte was incorporated into a UFO-type cell. For the measurement device, the VSP-300 manufactured by BioLogic was used. For the electrodes, metals with low electrical resistance and high stability, such as Au, Pt, and Ag, were used.

In the impedance measurement, an alternating current signal was applied to each solid electrolyte at a plurality of frequencies, and an alternating current impedance was measured at each frequency. By plotting the measured impedances on a complex plane, a complex impedance plot including an arc trajectory shown in FIG. 4 was obtained. Then, the resistance value of the measurement sample was acquired from the contact point between the extension line of the plurality of measurement points at which the impedance decreased in an arc shape and the horizontal axis, and the ion conductivity was calculated by multiplying the inverse of the resistance value by the thickness (cm) / the electrode area (cm²) of the measurement sample.

As a result, the ionic conductivity of the solid electrolyte 15 of the present embodiment was 2.0×10⁻³ S/cm, and the ionic conductivity of the comparative example was 3.0×10⁻⁴ S/cm. In the solid electrolyte 15 of the present embodiment, a significantly higher ionic conductivity was obtained than in the comparative example.

Thus, the secondary battery 10 including the solid electrolyte 15 of the present embodiment has an ionic conductivity with a mantissa of 2.0, a base of 10, an exponent of -3, and units of S/cm. The solid electrolyte 15 has an ionic conductivity on the order of 10⁻³ S/cm, which is significantly higher than that of the comparative example. The solid electrolyte 15 has an ionic conductivity that is an order of magnitude different from that of the comparative example.

The mantissa of the ionic conductivity of the solid electrolyte 15 varies depending on the adopted alkali metal, lanthanoid, cationic metal, and anion that is substitutable with an O atom. It is also expected that the mantissa of the ionic conductivity will be 1.0 or less, or 10.0 or more.

Furthermore, the ionic conductivity also varies depending on the measurement environment and the measurement method. At room temperature, it is expected that the mantissa will increase with increase in the measurement environment temperature.

Here, results of measuring the ionic conductivity of the solid electrolyte 15 of the present embodiment while changing the environmental temperature will be described. The ionic conductivity was measured using the above-described measuring device under the same measuring conditions except for the environmental temperature. The ionic conductivity was measured 3 hours after the temperature was set.

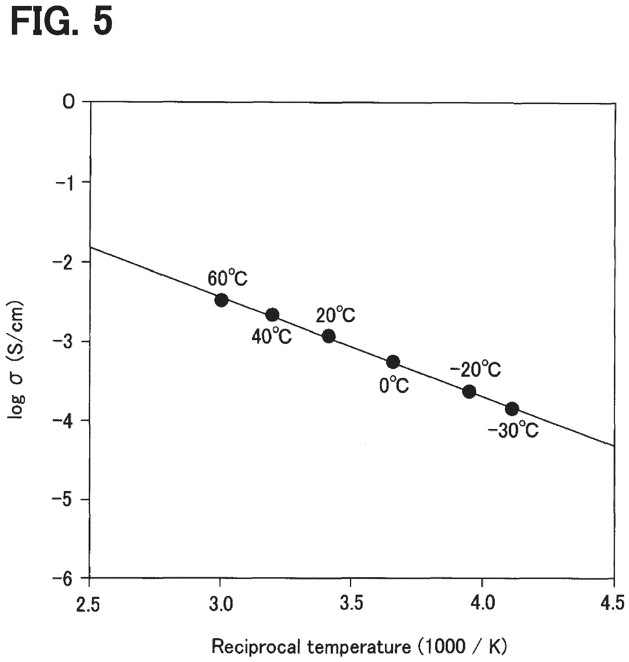

FIG. 5 shows the results of measuring the ionic conductivity σ of the solid electrolyte 15 at temperatures of 60°C, 40°C, 20°C, 0°C, -20°C, and -30°C. In FIG. 5, the vertical axis represents the logarithm of the ionic conductivity σ, and the horizontal axis represents the reciprocal of the environmental temperature. As shown in FIG. 5, it is understood that the ionic conductivity of the solid electrolyte 15 is temperature dependent. Specifically, the ionic conductivity increases with increase in the environmental temperature, and the ionic conductivity decreases with decrease in the environmental temperature.

The solid electrolyte 15 of the present embodiment described above has the pyrochlore structure including the alkali metal and the lanthanoid as cations. The solid electrolyte 15 having such characteristics can have an improved ionic conductivity compared to oxide-based solid electrolytes that have been conventionally known as solid electrolytes for secondary batteries. Therefore, the secondary battery 10 using the solid electrolyte 15 of the present embodiment can improve an output density.

Moreover, the solid electrolyte 15 of the present embodiment has the defect structure. This can improve the ionic conductivity. The output density of the secondary battery 10 using the solid electrolyte 15 can be improved.

The present disclosure is not limited to the embodiments described above, and various modifications can be made as follows within a range not departing from the spirit of the present disclosure. The means disclosed in each of the above embodiments may be appropriately combined to the extent practicable.

For example, in the above embodiments, the solid electrolyte for the secondary battery of the present disclosure is applied to a lithium ion battery, but the solid electrolyte for the secondary battery of the present disclosure may be applied to another secondary battery. Specifically, when K is used as the alkali metal represented by Aa in the composition formula, it can be used as a solid electrolyte for a potassium ion battery, and when Na is used as the alkali metal represented by Aa in the composition formula, it can be used as a solid electrolyte for a sodium ion battery.

Although the disclosure has been described in accordance with the examples, it is understood that the present disclosure is not limited to the above examples or structures. To the contrary, the present disclosure is intended to cover various modification and equivalent arrangements. In addition, while the various elements are shown in various combinations and configurations, which are exemplary, other combinations and configurations, including more, less or only a single element, are also within the spirit and scope of the present disclosure.

## Claims

1. A solid electrolyte for a secondary battery, comprising an oxide-based solid electrolyte having a pyrochlore structure represented by a composition formula of Aa_{2-α}Ab_{(1+α)/3}B₂O_{7-β}X_{β}, where
Aa is an alkali metal,
Ab contains at least a lanthanoid,
B is a cationic metal different from Aa and Ab, and
X is an anion that is substitutable with an O atom constituting the pyrochlore structure.

2. The solid electrolyte for the secondary battery according to claim 1, wherein, in the composition formula, α is in a range of 0.6<α<2.0, β is in a range of 0<β≤1, and the oxide-based solid electrolyte has a defect structure.

3. The solid electrolyte for the secondary battery according to claim 1, wherein, in the composition formula, a sum of valences of cations composed of Aa, Ab, and B and anions composed of O and X is negative, and the solid electrolyte has a defect structure.

4. The solid electrolyte for the secondary battery according to any one of claims 1 to 3, wherein the alkali metal is selected from a group consisting of Li, Na and K.

5. The solid electrolyte for the secondary battery according to any one of claims 1 to 4, wherein the lanthanoid is at least one selected from a group consisting of La, Ce, Nd and Sm.

6. The solid electrolyte for the secondary battery according to any one of claims 1 to 5, wherein B is at least one selected from a group consisting of Ta, Nb, Ti, Zr, Hf, V, Sb and Bi.

7. The solid electrolyte for the secondary battery according to any one of claims 1 to 6, wherein X is at least one selected from a group consisting of F, OH, S and Cl.

8. The solid electrolyte for the secondary battery according to any one of claims 1 to 7, wherein the solid electrolyte has an ionic conductivity of an order of 10⁻³ S/cm at room temperature.

9. A secondary battery comprising:
the solid electrolyte (15) for the secondary battery according to any one of claims 1 to 8; and
a positive electrode (14) and a negative electrode (12) disposed so as to sandwich the solid electrolyte for the secondary battery.
